Europäisches Patentamt

European Patent Office

Office européen des brevets

(11) Publication number: **0 336 304**
**A1**

## EUROPEAN PATENT APPLICATION

(21) Application number: 89105658.2

(22) Date of filing: 31.03.89

(51) Int. Cl.4: **H01B 1/20 , H01B 1/12 ,**
**H01B 1/22 , C09D 5/24 ,**
**B05D 5/12**

(30) Priority: 04.04.88 US 177752

(43) Date of publication of application:
**11.10.89 Bulletin 89/41**

(84) Designated Contracting States:
**AT BE CH DE ES FR GB GR IT LI LU NL SE**

(71) Applicant: **THE B.F. GOODRICH COMPANY**
**3925 Embassy Parkway**
**Akron Ohio 44313-1799(US)**

(72) Inventor: **Sullivan, Francis Ryan**
**1401 Lynn Park Drive**
**Cleveland Ohio 44121(US)**

(74) Representative: **von Kreisler, Alek,**
**Dipl.-Chem. et al**
**Patentanwälte Von Kreisler-Selting-Werner**
**Deichmannhaus am Hauptbahnhof**
**D-5000 Köln 1(DE)**

(54) Ultra thin, electrically conductive coatings having high transparency and method for producing same.

(57) This invention relates to ultra thin, electrically conductive films or coatings having surface resistivities in the semi-conducting range.

The electrically conductive coating or film is produced by a very specific method that provides for the deposition of an ultra thin layer of the electrically conductive film. The method may be employed with a broad spectrum of polymer containing formulations, e.g. paints, and thus may be applicable to a wide variety of substrates.

EP 0 336 304 A1

# ULTRA THIN, ELECTRICALLY CONDUCTIVE COATINGS HAVING HIGH TRANSPARENCY AND METHOD FOR PRODUCING SAME

## BACKGROUND OF THE INVENTION

### Field of the Invention

This invention relates to ultra thin, electrically conductive films or coatings having surface resistivities in the semi-conducting range that are useful for a wide variety of applications. More specifically, the ultra thin films comprise a network of at least one metal and sulfur in combination to provide the required level of electrical conductivity and may be deposited in a very thin or ultra thin layer to produce a coating having a high degree of transparency. The electrically conductive coating or film is produced by a very specific method that provides for the deposition of an ultra thin layer of the electrically conductive film. The method may be employed with a broad spectrum of polymer containing formulations, e.g., paints, and thus may be applicable to a wide variety of substrates.

### State of the Art

With the advent of elaborate solid state circuitry devices the requirements for performance characteristics of conductive coatings have become more stringent. These solid state devices include electronic memories susceptible to so-called EMI (electromagnetic wave interference) or RFI (radio frequency interference) and cannot tolerate the build of electrostatic charge on their surfaces. Therefore, there is a need for ESD (electrostatic dissipative) and antistatic coatings. EMI and RFI have demonstrated a capability for de-programming memories and the potential for ruining circuitry thus rendering complicated electronic circuitry devices useless. In the past, EMI or RFI sensitivity was not of particular concern to the electronics industry as electronics devices typically were housed in metallic housings which functioned to shield electronic devices from EMI or RFI interference.

More recently, plastics have found increasing use in forming cabinetry for containing electronic components, as well as use in the construction of such components, and, typically, such plastics are sufficiently electrically non-conductive whereby, unlike metal housings, no significant shielding from RFI or EMI electromagnetic radiation or static change build-up is achieved. Conductive, metal sulfide coatings for plastics, in particular, have been described in the art. While the coatings of the prior art have been disclosed as being electrically conductive and effective for the particular purposes disclosed, the coatings are colored opaque. Therefore, these coatings are not useful for such applications as CRT screens, computer slide-packs, medical products and the like.

Coatings of the nature discussed above are disclosed, for example in Chemical Abstracts, Vol. 100, 18:140526j, (1983). An electrically conductive porous film is disclosed for use as an electrode or filter and is prepared by dispersing copper sulfide in a nitrile group-containing porous film.

A cyano group-containing polymer, e.g., polyacrylonitrile, film containing copper sulfide to make the film electrically conductive is disclosed in Chemical Abstracts, Vol. 99, 16:123808w (1983).

Copper I sulfide coated polymers are disclosed in Chemical Abstracts, Vol. 104, 4:20496k (1985). The coated polymers are prepared by dipping polymers in an aqueous solution of copper II compounds and reducing agents or in copper I compound solutions and treating with solutions of sulfur donors, e.g., $Na_2S_2O_3$.

Chemical Abstracts, Vol. 104, 18:150762e (1985) discloses plastics or fibers having high durability and high electrical conductivity containing copper sulfide layers. These plastics, fibers or articles prepared from the plastics or fibers are dipped in an aqueous solution of $CuSO_4$ and in $Na_2S_2O_3$.

In Chemical Abstracts, Vol. 104, 6:35139v (1985) is disclosed anti-static paper substitutes that are formed by treating the paper substitute fibers with an aqueous $CuSO_4$-$Na_2S_2O_3$ solution to provide fibers containing copper sulfide.

In Chemical Abstracts, Vol. 89, 2:7178k (1978), a method is described for the electrochemical metallization of plastics utilizing a current-conducting copper sulfide latex. The method consists of a preliminary surface treatment of the plastics with the copper salt in water followed by a NaS₂ treatment. This treatment results in the formation of a copper sulfide coating on the surface. The time and temperature of the treatment had no significant effect on the properties of the current conductive coating.

A similar process is described in Chemical Abstracts, Vol. 85, 12:84619z (1976) where polypropylene is treated in a sulfide solution in perchloroethylene followed by washing in pure solvent and drying which, in turn, is followed by treatment in an ammonia solution of a copper salt in the presence of a reducing agent. It is disclosed that a dark-colored layer of copper sulfide is formed on the surface of a polypropylene having electrical resistance of 50-100 OMEGA.

U.S. Patent No. 3,682,786 discloses a method for treating a plastic substrate in order to electroplate a metal coating on a substrate. The method involves treating the substrate with the solution or dispersion of sulfur in a solvent, followed by contacting with an aqueous solution of a copper salt, optionally treating with an aqueous solution of palladium chloride and electroplating to form a coating of the desired metal having the desired thickness.

U.S. Patent No. 4,566,991 discloses a process for preparing electrically conducting polymeric compositions by forming such polymers and one or more metal salts, and treating this composition with a reagent to form the corresponding carbonate.

U.S. Patent No. 4,604,427 discloses a method of forming an electrically conductive polymer blend which comprises impregnating a non-porous, swellable or soluble host polymer with:

a. one or more cyclic compounds selected from the group consisting of pyrrole, aniline and substituted analogs of each, and

b. at least one chemical oxidant selected from group consisting of polyvalent metal compounds, e.g., divalent copper compounds.

There remains to be, however, a need for an effective, ultra thin electrostatic dissipating (ESD) and/or antistatic coating or film for a number of applications where the coating is transparent. Furthermore, there is a need for transparent ESD coatings and/or antistatic coatings, which contain a very low concentration of active or labile components such as sulfur. Furthermore, there is a need for such coatings that may be effectively used with a wide variety of substrates and in the alternative provide EMI/RFI shielding. None of the foregoing disclosures teach nor suggest such a coating or film.

## SUMMARY OF THE INVENTION

In accordance with the present invention, a transparent electrically conductive film comprising a network of at least one metal ion, sulfide or polysulfide on or within the surface of a polymer binder having a wide range of applications on a variety of substrates has been developed. Further in accordance with the present invention, a method for depositing an ultra thin, (50 to about 5000 Angstroms) electrically conductive film on a wide variety of substrates has been developed.

Still further in accordance with the present invention, a coated substrate having a transparent, electrically conductive outer layer comprising a network of at least one metal ion, a sulfide or polysulfide ion on or within a polymeric coating is provided.

Still further in accordance with the present invention, a method for depositing an ultra thin metal film useful for providing electrical conductivity to insulating materials and having EMI/RFI shielding applications is provided.

Still further in accordance with the present invention, an ultra thin, transparent ESD coating or film having a very low concentration of metal and sulfur is provided. Substantially all of the sulfur is chemically bound in the coating and the coating is therefore substantially free of any labile sulfur which may act as an oxidizing or degrading agent. However, for applications requiring even lower levels of labile sulfur, the coating or film may be post-treated with a reagent such as CuCl.

Still further in accordance with the present invention, a transparent ESD polymer film having a unique and intricate structure that comprises a network of at least one metal ion, a sulfide and/or polysulfide ion on or within the surface of a polymer film, and having a resistivity of about $10^1$ to $10^{14}$ ohms/sq, and a thickness that ranges from about 50 Angstroms (Å) to about 5000 Angstroms (Å) is provided.

Still further in accordance with the present invention, a method is provided for obtaining a transparent, electrically conductive film having essentially no labile sulfur by treating a film comprising a network of at least one metal ion, a sulfide and/or a polysulfide ion on or within the surface of the polymeric coating with a reagent that reacts with labile sulfur present on or within the surface of the film.

Still further in accordance with the present invention, an insulating material comprising a thin metal film at the surface of the insulating material and the method for producing same is provided. The thin metal film is produced by reduction of a thin film comprising a network or at least one metal ion, a sulfide and/or polysulfide on or within the surface of a polymeric material coated on or comprising the particular insulating material.

These and other aspects of the invention will become clear to those skilled in the art from the reading and understanding of the specification.

Brief Description of the Drawings

Fig. 1 is a plot illustrating resistivity as a function of polymer drying time for an ESD coating according to the present invention.

Fig. 2 is a plot illustrating the effect of development time in the metal ion bath on surface resistivity for the ESD coating of the present invention.

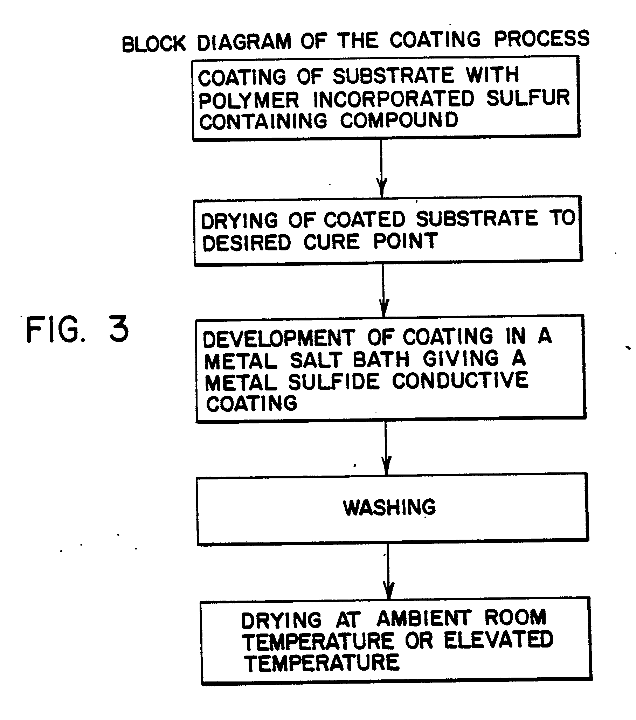

Fig. 3 is a block diagram setting forth the process of producing the conductive coatings of the present invention.

The invention will be further described in connection with attached drawing figures showing preferred embodiments of the invention including specific components and formulations of the coating. It is intended that the drawings included as a part of the specification be illustrative of a preferred embodiment of the invention and should in no way be considered as a limitation on the scope of the invention.

Detailed Description of the Preferred Embodiment

A very unique and effective technique has been developed for depositing a transparent and electrically conductive, metal sulfide containing film on a wide variety of substrates. By this technique, a wide variety of substrates may be provided with ESD shielding properties. Also, the technique according to the invention may provide a wide variety of plastic substrates plateable for EMI/RFI shielding applications as well as other ultimate utilities. The technique of the present invention, which produces a transparent film or coating, utilizes a very low concentration of a particular metal ion or combination of metal ions and the sulfur releasing agent. This feature of the present invention gives the advantage of very favorable economics for the technique and at the same time, gives a coating that is substantially free of labile sulfur which may act as an oxidizing agent for other materials that it may come in contact or to degrade the film.

The process developed according to the present invention, allows the deposition of an ultra thin layer at the surface of a particular substrate wherein the deposited layer has a unique and intricate structure comprising a network of at least one metal ion, a sulfide and/or polysulfide ion on or within the surface of a polymer coating forming a high molecular weight complex network. Analysis of a layer of film formed at the surface of a particular substrate gives the following metal sulfide formula: $M_xA_yS_z$ where x and z are partial integers, integers or mixed numbers and y may be 0 or a partial integer, integer or mixed number. M and A represent different metal cations. This analysis indicates that the structure of the film or electrically conductive layer deposited is very likely a highly complex network. In other words, sulfide and polysulfide linkages combined with the metal ion or combination of metal ions to form a network which is continuous over the surface of the particular polymer binder of the coating on a particular substrate. Thus, the process of the present invention provides a technique which utilizes a very low concentration of the particular metal ion or combination of metal ions and the sulfur releasing agent while at the same time providing for the deposition of an ultra thin, continuous film or layer at the surface of the substrate in order that the layer is electrically conductive and transparent and, in turn, results in its utility for applications which require an ESD and/or antistatic transparent coating.

The process according to the present invention, may be summarized by the following listed steps:

1. applying a coating composition to a particular substrate, wherein the coating composition comprises a polymer binder adherent to said substrate and an effective amount of a sulfur containing component capable of diffusing out of the polymer binder matrix to the surface of the coating film and capable of reacting with a metal ion to form an electrically conductive layer at or near the surface of the coating;

2. partially drying the coated substrate to that point of film formation whereby the sulfur containing component may still diffuse to the surface of the cured film to produce an ultra thin electrically conductive layer;

3. contacting the cured coated substrate of step 2 with a solution containing metal ions, said metal ion or combination of metal ions is/are capable of forming an electrically conductive layer on or within the surface of said coating by reaction with said sulfur containing component; and

4. drying said contacted coated surface from step 3 for an effective amount of time to give the desired electrically conductive surface layer.

It is important for the metal sulfide/polysulfide network to be deposited at the surface of the coating adhered to the particular substrate. It should be recognized by one of ordinary skill in the art that if this network layer does not form at or near the surface of the coating, then it will not provide the effective EMI/RFI shielding, antistatic and/or electrostatic dissipation that is desired or the plateability that may be desired. Specifically, the sulfur component should be selected such that it will diffuse from a partially cured polymer binder matrix of the coating initially applied to the particular substrate. Furthermore, the sulfur component not only must be capable of diffusing, i.e, migrating, to the surface of the partially dried coating, but also must be capable of reacting with the metal ions in a contacting solution at the surface of the coating to form a network with the metal ion or combination of metal ions on or within the surface of the polymer film to give a continuous, ultra thin surface layer on the coating that exhibits sufficient electrical conductivity for the coated substrate. Thus, the selection of the particular sulfur component involves the reactivity of the sulfur moiety as well as the substituent groups making up this component in order that the component is emulsifiable, dispersible or soluble in the coating composition as well as capable of diffusing out of the cured coating applied to a particular substrate.

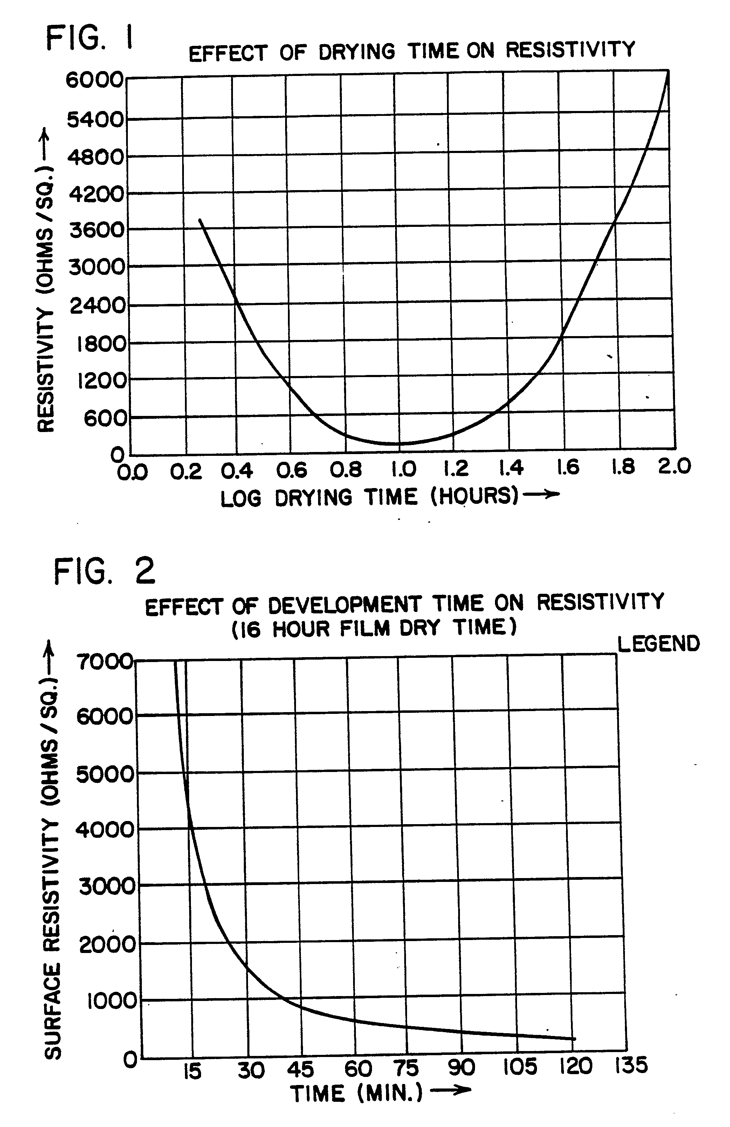

It should also be recognized that there is a maximum allowable drying time for each particular coating of the initially coated substrate since the degree to which the coating is cured affects the ability of the sulfur component to migrate to the surface of that coating. While not wishing to be bound by any particular theory of invention, it is believed that the duration of the drying time of the polymer following application to a substrate affects the porosity of the polymer binder. In general, as drying time increases, the polymer reaches a cure point beyond which (upon further drying) the porous matrix of the polymer binder begins to close off, cutting off migration channels to the polymer surface. The polymer incorporated sulfur containing component then has fewer routes of migration. Consequently, less sulfur containing component diffuses out to the surface of the polymer. As used herein, the terms "cure," "curable", "cured" and "curing" refer to that point of polymer film formation at which the desired amount of sulfur containing component diffuses or migrates to the surface of the drying polymer. It will be recognized by those skilled in the art that the amount of drying time will be dependent upon the particular polymer binder system, the amount of resistivity desired and the substrate to be coated. The effect of drying time on the resistivity of a latex polymer coated substrate is illustrated in Fig. 1. It should be evident to those skilled in the art that different polymer systems will give different curves. In a preferred embodiment, a drying time of about 16 to about 24 hours has been found to be effective. This particular feature of the present invention offers the distinct advantage that a wide variety of substrates may be treated in this manner by the selection of a coating composition that is adherent to the particular substrate to be employed in an ultimate end use. Various methods of coating the substrates with the metal sulfide/polysulfide films of the present invention may be utilized. Thus, for example, methods such as dip coating, spray coating, roller coating and the like may be used.

The selection of the particular coating composition to be applied to the substrate is also important other than selecting a coating composition that is adherent to the particular substrate and which the sulfur component is dispersible therein. The other consideration involves the capability of the surface of the coating of being wetted, i.e. is sufficiently hydrophilic, in order that the metal ion containing solution will wet and adequately contact the surface of the coating to allow sufficient interaction with the sulfur containing component diffusing to the surface of the coating. Wetting agents may be employed in the ion containing solution to enhance its wetting characteristics. The anion associated with the metal ions is not particularly critical in the metal ion containing solution. However, if the solution contains copper ions, the pH may require adjustment to a level to promote the chemical reaction taking place between the metal ions and the sulfur containing component diffusing to the surface of the coated substrate. The contacting time (i.e., development time) with the metal ion solution must be sufficient to ensure the formation of a continuous film network of the semi-conducting metal sulfide/polysulfide. Fig. 2 illustrates that the resistivity of the coated substrate is a function of development time in the metal ion solution. The deposit of the metal sulfide/polysulfide network at the surface of the coating may be accelerated by heating the metal ion

5

containing bath during the contacting or development of the coated substrate. It is reiterated that it is important for the chemical reaction to take place at or near the surface of the coating in order to deposit the electrically conductive network layer to give the desired end product. In other words, the chemical reaction cannot be taking place deep within the interior of the polymer matrix of the coating adhered to the particular substrate. Therefore, the selection of the sulfur component, the coating composition as well as the metal salt for use in the development solution are all important considerations in the process of the present invention.

Additionally, it has been discovered that the drying time of the final step after development of the coated substrate may be important to the electrical conductivity, i.e., the resistivity, of the layer deposited on the surface of the coating. For the purposes of the present invention, a final drying time of about 5 minutes to about 2 hours at a temperature in the range of about 80° C to about 120° C is preferred. A drying time of about 45 minutes to about 1 hour and 30 minutes is most preferred. The combination of the development step along with the final drying step fixes the metal sulfide ratio and thus promotes the formation of a more conductive film. This particular aspect of the present invention promotes the formation of a stable, ultra thin film that is transparent. Moreover, the thus formed coated substrate containing the fixed, stable (ESD) layer at the surface of the coating may be further treated in an aqueous salt solution in the presence of a second element or compound capable of reducing the metal sulfide/polysulfide, forming a thin metal film at the surface of the coated substrate to provide a product for EMI/RFI shielding applications and the like. For example, this technique provides an excellent process for forming an ultra thin gold layer on the surface of a particular substrate. Examples of suitable reducing elements and compounds include aluminum foil in aqueous sodium carbonate and sodium borohydride.

The fixed metal sulfide and/or polysulfide films of the present invention can be further treated (post treated) with metal salts, i.e., silver nitrate, silver acetate, gold chloride, indium chloride, etc., to give a metal sulfide coating wherein the initial (first) metal ion is substantially replaced by a second metal ion donated from the metal salt. The term "substantially replaced" refers to the fact that trace amounts of the initial metal ion may remain in the final coating. For example, when copper sulfide and/or polysulfide coatings are post treated with a second metal salt solution such as, for example, gold and silver nitrate, anywhere from 0.2 atomic % to 0.34 atomic % of the initial copper ion will remain in the final coating. It should be evident to those skilled in the art that post treatment conditions such as, for example, exposure time to the second metal replacement ion and temperature conditions will affect the amount of the initial metal ion remaining in the coating. In another embodiment, the metal chloride instead of replacing the metal ion in the metal sulfide coating, becomes part of the metal sulfide complex in the coating to give a dimetal sulfide.

It has been found that the deposited films according to the present invention will have an approximate thickness within the range of about 50 Angstroms (Å) to about 5000 Angstroms (Å) or more. In a preferred embodiment the film thickness will range from about 50 Å to about 200 Å. Where a high degree of transparency is necessary for particular application, a thinner network film will be desired. The thickness of the network film may be controlled to a limited extent by controlling the concentration of the sulfur containing component in the particular coating composition.

In general, the process of the present invention and the resulting products have a wide range of applications, e.g., for screens used in producing cathode ray tubes (CRT) that are ultimately used in personal computers, various electronics equipment, television sets and the like, for use in computer slide packs which are used to hold electrosensitive computer components for the assembly of computers, for antistatic bags used in packaging, for use in the medical products field, e.g. electrode sensors and the like, for use in the semi-conductor field and the like. Other applications of the present invention include providing a particular substrate with a surface having sufficient electroconductivity for electroplating the particular surface.

As discussed above, the selection of the sulfur containing (sulfur releasing) component may be important to the process and the corresponding formation of the electrically conductive film according to the present invention. As previously pointed out, the sulfur moiety of the sulfur containing component must be sufficiently reactive to react with the metal or combination of metals in the development bath at the surface of the coating applied to the substrate. Furthermore, the substituents bonded to the sulfur containing moiety may affect the diffusion of the sulfur component from the polymer matrix of the applied coating. The same consideration will also affect the ease of dispersing the sulfur component in the coating composition. Examples of such sulfur containing components include thioacetamide, thioformamide, dithiooxamide and dithiourea. For the purposes of the present invention thioacetamide and thioformamide are the most preferred sulfur containing components useful in the present process. The sulfur containing component must be in a concentration range in the coating composition sufficient to form an effective electrically conductive layer at the surface of the coating on the substrate while being in a sufficiently low concentration to provide the capability of forming a transparent layer. This amount will generally range from about 0.1 phr by weight to about 10 phr by weight of the sulfur component in the coating composition. In a most preferred embodiment, this amount will range from about 0.5 phr by weight to about 5.0 phr by weight. As also discussed above, the concentration of the sulfur containing component will affect to a certain extent thickness of the deposited film.

The metal ions used in the development bath of the present invention are generally transition metal ions that form insoluble compounds with sulfur and that form an electrically conductive continuous network with sulfur of the surface of a coated substrate. Such metal ions include Cu, Ag, Au, Pt, Fe, Pd, In, Fe, Hg, Cd, Bi, Pb, Mn, Co, Ni, Mo, Ga, Zn, Cr, Ti, V, Ru, and W. For the purposes of the present invention, copper, silver, gold, palladium, platinum and indium are the most preferred. It should also be recognized that the electrically conductive film according to the present invention also may include combinations of two or more of these metals, e.g. copper and indium, copper and molybdenum, copper and vandanium and the like. The concentration of the metal ion or combination of metal ions in the development solution is not particularly critical only to the extent that they are present in a sufficient concentration to react with substantially all of the sulfur containing component diffusing to the surface of the coating applied to the particular substrate.

The anions making up the metal salt for dissolution in the development solution are not particularly critical. The anion should provide sufficient water solubility for the metal ion and, in some instance, may require an adjustment of the pH to optimize reaction with the particular sulfur containing component. It has been found that usable anion salts for the purposes of the present invention include acetates, chlorides, nitrates, sulfates, phosphates, phosphites, perchlorates, and the like. For the purposes of the present invention, acetate salts and nitrate salts are preferred. As previously mentioned, it has been discovered that adjusting the pH of the development solution may also affect the formation of the electrically conductive metal sulfide network on the surface of the coating applied to the particular substrate. For example, in the case of copper salts, sulfate salts have been found to work in the process of the present invention if the pH is adjusted to the range of about a pH of 5 to about a pH of 9 with a buffer such as sodium acetate. Thus, some consideration should be given to the selection of the particular metal salt or combination of metal salts to be used in the development bath.

As far as the polymer binders of the present coating composition are concerned, solvent or water dispersible polymers (latexes) may be utilized. The key polymer considerations, as previously discussed for the coating composition, are: 1) the sulfur containing component must at least be dispersable or emulsifiable within the polymer; 2) the polymer should be curable to a porous matrix such that the sulfur containing component can diffuse or migrate to the surface of the polymer; 3) the polymer must be adherent to a substrate surface; and 4) the cured polymer must be wettable when contacted with the development bath.

The preferred polymer binders of the coating composition are the water based polymers or polymer latexes. Latex binders are advantageous from the standpoint that they are easily handled, environmentally safe, i.e., no organic solvent waste, and economical to use.

It has been found that latex coating compositions having a Tg of less than about 75°C have been preferred for the purposes of the present invention. In the most preferred embodiment, latex compositions having a Tg of less than 20°C are particularly useful in the process of the present invention. It should be pointed out that latex compositions with high Tg's can be utilized in conjunction with various Tg lowering additives, i.e., coalecing agents, plasticizers and cosolvents, which effectively lower the Tg of the compositions to preferred levels.

Suitable polymers useful as latex binders in the present invention include various acrylic and styrene, vinyl chloride and styrene-butadiene based latexes manufactured and sold by the BFGoodrich Company under the trademarks HYCAR® (commercial designations 2671, 26120, 26172, 26288, 26334, 26337, 26342, and 26796), GEON® (commercial designations 660X13 and 460X45), and GOOD-RITE® (commercial designation 1800X73), respectively. The physical characteristics of the foregoing latexes are set forth below.

7

| Commercial Designation | Polymer Type | Glass Transition Temp. (Tg), °C | Specific Gravity | Solids Content (% by wt.) | Brookfield (cps) |
|---|---|---|---|---|---|
| HYCAR | | | | | |
| 2671 | Carboxylated acrylic copolymer latex | - 11 | 1.07 | 53 | 170 |
| 26120 | Acrylic copolymer latex | - 11 | 1.07 | 50 | 115 |
| 26172 | Carboxylated acrylic copolymer latex | + 33 | 1.05 | 50 | 150 |
| 26288 | Carboxylated acrylic copolymer latex | 20 | - | 49 | 60 |
| 26334 | Acrylic copolymer latex | - 20 | 1.07 | 48 | 125 |
| 26342 | Carboxylated acrylic copolymer latex | + 5 | - | 53 | - |
| 2600X337 | Styrene copolymer latex | + 103 | 1.07 | 50 | 67 |
| 26796 | Carboxylated acrylic copolymer latex | 0 | 1.07 | 48 | 120 |
| GEON | | | | | |
| 460X45 | Vinyl chloride copolymer latex | + 20 | 1.12 | 49 | 40 |
| 660X14 | Vinylidene chloride copolymer latex | + 7 | 1.19 | 48.5 | 100 |
| GOOD-RITE | | | | | |
| 1800X73 | Styrene-butadiene latex | + 10 | 1.01 | 45 | 50 |

Particularly preferred in the practice of the invention are the HYCAR latexes (commercial designations 2671, 26172, 26288, 26342 and mixtures of 26172 and 26337). Other useful latex binder compositions include polyurethane based latexes sold by Mobay Chemical Corporation under the trademark BAYBOND® (commercial designations 110-2, 114 and 121). Such polyurethane latex compositions are disclosed in U.S. Patent No. 4,408,008, which is hereby incorporated by reference.

The substrates to be treated, according to the present invention, are dependent upon the ultimate end use of the substrate, e.g., as pointed out above, screens for CRT tubes for use in personal computers and the like, computer slide packs, medical products and the like. Thus, such substrates include glass, and a variety of polymer materials which include polycarbonate (transparent sheet) sold under the trademark LEXAN® 900 by General Electric, general purpose ABS resins, polyvinyl chloride, corona treated polyethylene and the like. The foregoing further illustrates the above-mentioned advantage of the process according to the present invention, namely the process is applicable for a wide variety of substrates that may have an even wider variety of ultimate end uses.

Various substrates were treated according to the process of the present invention and are illustrated in the following examples. While these examples will show one skilled in the art how to operate within the scope of this invention, they are not to serve as a limitation on the scope of the invention for such scope is defined only in the claims. It is pointed out that in the following examples and elsewhere in the present specification and claims, all percentages and all parts are intended to express percent by weight and parts by weight unless otherwise clearly indicated.

The resistivity measurements taken in the following examples were measured with a conductivity probe (Model No. 90-700-022-1, Graham Magnetics, North Richland Hills, TX) which allows surface resistivities in units of ohms/sq. to be read directly from an ohmmeter.

## Example 1

This example illustrates the general procedure for preparing the transparent conductive coatings of the present invention.

To 214.7 g of BAYBOND 110-2 polyurethane latex dispersion (35% solids content) was added with stirring 0.8 g of thioacetamide dissolved in 4 g of distilled water. The coating composition was then spray coated onto transparent polycarbonate sheets and dried at ambient room temperature for 16 hrs. The dry film thicknesses of the coated polycarbonate substrate ranged from 1.5 to 3.5 mils. The coated substrates were then developed in a 2% aqueous solution of cupric acetate for the specified time period given in Table I, washed with distilled water, and dried at 100°C for 10 mins. The coated substrate samples were cooled and their surface resistivities were measured. The results are set forth in Table I.

8

TABLE I

| Development Time (Mins.) | Surface Resistivity (ohms/sq.) |
|---|---|
| 15 | 6,000 |
| 30 | 915 |
| 60 | 540 |
| 120 | 280 |

Coating adhesion to the polycarbonate substrates was rated per ASTM D 3359-78, Method B. Coating adhesion achieved the highest rating, e.g., 5B.

## Example 2

In this example development bath conditions were varied to determine the effect on surface resistivities. The importance of drying the coated substrate under elevated temperatures following the development bath step is also illustrated. Coated substrates were prepared following the recipe and procedures set forth in Example 1. The metal ion development solution concentration, bath temperature and immersion time were varied as set forth below in Table II. The surface resistivities were measured following drying at ambient room temperature. Duplicate samples were dried at elevated temperature (90-100°C) for 10 minutes and measured for surface resistivity. Results are given below.

TABLE II

| Cupric Acetate (Conc. % by wt.) | Temp. (°C) | Immersion Time (min.) | Surface Resistivity (ohms/sq.) | |
|---|---|---|---|---|
| | | | Dried At | |
| | | | Ambient Temp. | Elevated Temp. |
| 2 | 35 | 5 | 325,000 | 1,000 |
| 2 | 35 | 10 | 125,000 | 425 |
| 2 | 35 | 15 | 1,000 | 200 |
| 2 | 52 | 15 | 1,100 | 200 |
| 2 | 22 | 15 | $1.6 \times 10^6$ | 11,000 |
| 1 | 22 | 60 | 190,000 | 700 |
| 2 | 22 | 60 | 180,000 | 600 |
| 5 | 22 | 60 | 190,000 | 600 |

## Example 3

This example illustrates the importance of the duration of the drying step (step 2 of the present process) following the initial coating step. A coating composition was prepared as in Example 1 and spray coated onto polycarbonate substrate sheets 4 in.x 4 in.x 1/16 in. The coated polycarbonate substrates were then dried for varying times as set forth in Table III (ambient room temperature). The dried coated substrates were then immersed in an aqueous 2% copper acetate development bath for 1 hr. The substrates were washed with distilled water and then dried at 90-100°C for 10 min. Surface resistivities of the dried conductive coatings were measured. The results are given below.

9

TABLE III

| Drying Time (Hrs.) | Resistivity (ohms/sq.) |
|---|---|
| 1 | 6,000 |
| 4 | 625 |
| 5 | 465 |
| 24 | 425 |
| 72 | 3,500 |
| 144 | 1900-20X10$^6$ |

## Example 4

In this example the metal ion salt in the developing solution and pH of the developing solution were varied as set forth below. The coating composition was prepared following the recipe of Example 1 and cast onto polycarbonate substrates. The coated substrates were dried at ambient room temperature for 5 hrs. and then immersed in the development bath for 30 min. The coated substrates were removed from the bath, washed with distilled water and then dried for 5 min. at 110°C. The measured surface resistivities of the conductive coated substrates are given in Table IV.

TABLE IV

| Metal ion salt (2% solution) | pH | Resistivity (ohms/sq.) |
|---|---|---|
| $CuCl_2$ $2H_2O$ | 4.73 | 3X10$^6$ |
| $Cu(OAc)_2$ $H_2O$ | 6.24 | 20,000 |
| $CuSO_4$ $5H_2O$ | 4.96 | 10X10$^6$ |
| $CuSO_4$ $5H_2O$ + 2NaOAc (buffer) | 7.45 | 3,200 |
| $CuSO_4$ $5H_2O$ + $NH_4OH$ | 10.41 | >20X10$^6$ |
| $Cu(NO_3)_2$ $5H_2O$ | 5.01 | 1.6X10$^6$ |

## Examples 5-11

Various coatings were prepared utilizing acrylic, polyurethane and styrene-butadiene based latexes in the coating compositions as set forth in Table V. The acrylic and butadiene based compositions were prepared by combining (under stirring) 150 g of the latex, 1.8 g of concentrated ammonium hydroxide (30%), 0.8 g of thioacetamide dissolved in 5 g of water, and 7.1 g of 2-butoxyethanol as a cosolvent. The polyurethane coatings were prepared as set forth in Example 1 except that 1 phr of thioacetamide was used in the composition. The coatings were then sprayed or cast onto appropriate substrates and dried and developed in 2% aqueous copper acetate for the time periods set forth in Table V. Following development the coated substrates were washed and dried in an oven at 110°C for 10 mins. The surface resistivities of the coatings were measured. The results are set forth below.

## TABLE V

| Example | (Commercial Designation) | Latex Type (Hrs.) | Dry Time (Min.) | Development Time Surface Resistivity (ohms/sq.) |
|---|---|---|---|---|
| 5 | HYCAR* acrylic (26120) | 3 | 30 | 260-1000 |
| 6 | HYCAR* acrylic (26342) | 3 | 30 | 400-900 |
| 7 | GOODRITE* styrenebutadiene (1800X73) | 3 | 30 | 1,500-10,000 |
| 8 | BAYBOND** polyurethane (114) | 3 | 15 | 80,000-90,000 |
| 9 | HYCAR* acrylic (26172) | 3 | 10 | 300,000 |
| 10 | HYCAR* acrylic (26171) | 16 | 60 | 600-700 |
| 11 | BAYBOND** (121) | 16 | 60 | 6,000- $20 \times 10^6$ |

\* Trademark of The BFGoodrich Company
\*\* Trademark of Mobay Chemical Corporation

## Example 12

In this example the procedure of Example 1 was closely followed except that silver acetate replaced copper acetate in the development bath. The development bath immersion time was 1 hr. The final drying step was carried out under the same conditions as in Example 1. The measured resistivity of the coated substrate ranged from $15 \times 10^6$ to $20 \times 10^6$ ohms/sq. The conductive silver sulfide coated substrate was then reduced by immersing the substrate in a 5% sodium carbonate solution warmed to 40°C and then contacted with aluminum foil for several minute. The coated substrate was removed, washed and dried in an oven at 110°C, giving a thin metallic silver coated substrate with a surface resistivity of 300 ohms/sq.

## Example 13

Replacement of thioacetamide with thioformamide in the polyurethane resin system set forth in Example 1 resulted in an average of 10K ohms/sq. for cast films, dried for 3 hours at ambient conditions, developed for 30 minutes in 2% cupric acetate bath, and dried in oven at 110°C (when dried at room temperature, the resistivity was 20M ohm/sq.).

## Example 14

A 5 phr thioacetamide sulfur containing compound in a polyurethane dispersion (BAYBOND 110-2) was sprayed on a polymeric substrate (polyvinyl chloride) and dried overnite (16 hrs.) at ambient temperatures. The coated substrate was then immersed in 0.5% gold chloride ($AuCl_3$) for 10 minutes. The coated substrate was removed, washed with water, and dried in an oven at 110°C. The coating appearance changed to a yellow, highly reflective surface of gold sulfide. Surface resistivity was >20M ohms/sq.

This coating was then immersed in 1% aqueous sodium borohydride ($NaBH_4$) solution for approximately two (2) minutes. It was washed with water and dried. A very highly reflective metal film with surface resistivity of 700 ohms/sq. was obtained.

Another sample similarly prepared was submitted for Scanning Electron Microscopy (SEM) to determine film uniformity across the sample. The metallic gold coating produced by reduction appeared uniform and continuous and the metal thickness was estimated at 150 +/-50Å.

## Example 15

A sample of polyurethane dispersion (BAYBOND 110-2) containing one (1) phr of thioacetamide was cast on polymeric substrate. It was then dried in an oven at 85° C for six (6) minutes, cooled and then immersed in a solution that contained 0.004 moles/liter of palladium chloride and 0.02 moles/liter of sodium chloride for thirty minutes. The resulting coating was washed with distilled water and dried in a forced air oven at 85° C. The result was a brown coating of palladium sulfide with surface resistivities of >20,000 ohm/sq. This coating was subsequently reduced by immersion in a 2% NaBH₄ solution for approximately two minutes and yielded a steel grey, metallic coating with surface resistivity of 4,000 ohms/sq.

## Example 16

In this example, excess sulfur was removed from the conductive copper sulfide coating.

A sample of a copper sulfide coating was produced following the methods set forth in the foregoing examples. A section of the conductive coating was analyzed to determine the Cu:S ratio, it was found to range from approximately 1:2 to 1:3 as measured by electron spectroscopy for chemical analysis (ESCA).

In order to remove excess sulfur, the copper sulfide coating was then subjected to the following treatment:

The remainder of the sample was immersed for two minutes in a 70° C bath containing 4 g CuCl, 11 ml of conc. HCl and 100 ml of distilled water. The coating darkened during immersion, and was removed, washed with distilled water and dried in an oven at 110° C for 10 minutes. Before treatment, the coating had an average resistivity of 8000 ohms/sq. and following this treatment, it was measured at 650 ohms/sq. The coating was dark green. The Cu:S was again measured and found to be 1:1.

## Example 17

### Post Treatment of Copper Sulfide Film with Other Reagents

A sample of a copper sulfide coating (resistivity = 200-300 ohms/sq.) was treated with an aqueous solution of silver acetate (1%) for four minutes. The resulting material, a highly reflective surface, was washed and dried and the surface resistivity measured at $18.9 \times 10^8$ ohms/sq.

The experiment was repeated using gold chloride solution (5%) to produce a coating which had little residual copper and a Au:S ratio of approximately 1:1. The resulting surface resistivity was $11.7 \times 10^{11}$ ohms/sq.

The experiment was repeated utilizing a copper sulfide coated substrate having a surface resistivity of 1,000 ohms/sq. The coated substrate was immersed in a bath containing 2% InCl₃ for two hours. The film was washed with water and dried. Surface resistivity was measured at 1.4 K ohms/sq. and the coating was a bright yellow. The ratio of Cu:In:S was approximately 1:0.75:2.

While the invention has been described and illustrated above with reference to specific preferred embodiments thereof, those skilled in the art will appreciate that various changes, modifications and substitutions may be made therein without departure from the spirit of the invention. For example, various amounts for each of the components and specific materials used for each of the components making up the coating composition other than the preferred amounts or materials set forth hereinabove may be applicable as a consequence of the nature of the various components employed in the process and such other expected variations or differences and results are contemplated in accordance with the practices of the present invention. It is intended, therefore, that the invention be limited only by the scope of the claims which follow.

## Claims

1. An electrically conductive film, capable of dissipating electrostatic charge comprising a network of at least one metal ion, sulfide and/or polysulfide ion on or within the surface of a cured polymer binder wherein said film has a resistivity in the range of about $10^1$ to about $10^{14}$ ohms/sq.

2. The film according to claim 1 wherein said metal ion is selected from the group consisting of Au, Pd, In, Cu, Ni, Ag, Pt, and mixtures thereof, and said polymer binder has a Tg of less than about 75° C.

3. The film according to claim 1 wherein said metal and said sulfide and/or polysulfide are present in said film in an amount that ranges from about 0.1 phr by weight to about 10 phr by weight and wherein said metal is Cu or Au and said metal sulfide and/or polysulfide network film has a thickness in the range of about 50 A to about 500 A.

4. A coated substrate comprising a substrate having an adherent electrically conductive coating on the surface thereof, said coating comprising a network of at least one metal ion, a sulfide and/or polysulfide on or within the surface of a cured polymer film wherein said conductive coating has a resistivity in the range of about $10^1$ to $10^4$ ohms/sq.

5. The coated substrate according to claim 4 wherein said metal ion and said sulfur, in the form of sulfide and/or polysulfide, are present in an amount that ranges from about 0.1 phr by weight to about 10 phr by weight and said conductive coating comprises a continuous network of said metal ion and sulfide on or within the surface of said conductive coating.

6. The coated substrate according to claim 5 wherein said metal ion is selected from the group consisting of Cu, Ag, Au, Pd, In and mixtures thereof, and said polymer film comprises a polymer binder having a Tg of less than about 75° C and said network film has a thickness within a range of about 50 A to about 500 A.

7. The coated substrate according to claim 6 wherein at least one of said metal ions is copper.

8. The film according to claim 1 wherein said network of at least one metal ion, sulfide and/or polysulfide is represented by the formula:

$M_xA_yS_z$

where x and z are partial integers, integers, or mixed numbers, y is 0 or a partial integer, integer, or mixed number, and M and A represent metal cations.

9. A method for depositing an electrically conductive coating capable of dissipating electrostatic charge on a substrate comprising:

a) applying a coating composition to said substrate, said coating composition comprising a polymer binder adherent to said substrate and an effective amount of a sulfur containing component capable of diffusing out of the polymer matrix coated on the surface of said substrate and capable of reacting with a metal ion to form an electrically conductive layer on the surface of said coating;

b) partially drying the coated substrate to a point where the coating cures, whereby the sulfur containing component may diffuse to the surface of the partially dried coating and form a metal sulfide and/or polysulfide continuous network film on or within the surface of said partially dried coating;

c) contacting the partially dried coated substrate of step (b) with a solution containing a metal ion or combination of metal ions, said metal ion or combination of metal ions is capable of forming an electrically conductive layer on or within the surface of said coating by reaction with said sulfur containing component; and

d) drying said contacted coated substrate from step (c).

10. The method according to claim 9 wherein said polymer binder is a latex having a Tg of less than about 75° C.

11. The method according to claim 9 wherein said sulfur containing component is selected from the group consisting of thioacetamide, thioformamide, dithiooxamide, thiourea and mixtures thereof.

12. The method according to claim 9 wherein said drying step (b) is carried out at ambient room temperature for about 1 hour to about 24 hours.

13. The method according to claim 9 wherein said metal ion is a transition metal ion.

14. The method according to claim 13 wherein said metal ion is selected from the group consisting of Cu, Ni, Ag, Au, Pd, In or mixtures thereof.

15. The method according to claim 14 wherein at least one of said metal ions is copper and wherein the pH of said contacting solution is adjusted to within the range of about 5 to about 9.

16. The method according to claim 15 wherein the anion of said contacting solution is selected from the group consisting of acetate, chlorides, sulfate, nitrate, phosphite, phosphate, perchlorate, and mixtures thereof.

17. The method according to claim 9 wherein said sulfur containing component is present in said coating composition in an amount that ranges from about 0.1 phr by weight to about 10 phr by weight and wherein said network film is deposited at a thickness in the range of about 50 A to about 5000 A.

18. The method according to claim 9 wherein said coated substrate is further washed with distilled water after contacting with said solution containing metal ion or combination of metal ions.

19. The method according to claim 9 wherein said drying step (d) is carried out at a temperature from about 80°C to about 120°C for about 5 minutes to about 1 hour and 30 minutes.

20. The method according to claim 9 wherein said coating compositions are selected from the group consisting of an acrylate based latex, a styrene based latex, a polyurethane based latex and a styrene-butadiene based latex.

21. The method according to claim 9 wherein a single thin electrically conductive layer is deposited, wherein said layer is transparent and exhibits a resistivity in the range of about $10^1$ ohms/sq. to about $10^{14}$ ohms/sq. and comprises a complex structure of the metal ion with the sulfur ion on the surface of the polymer film.

22. The method according to claim 9 wherein said dried coating of step (b) has sufficient hydrophilic character such that the contacting solution of step (c) sufficiently wets the surface of said dried coating.

23. A method for forming a continuous metallic film on a substrate wherein said film provides EMI/RFI shielding to said substrate, comprising:

a) applying a coating composition to said substrate, said coating composition comprising a polymer binder adherent to said substrate and an effective amount of a sulfur containing component capable of diffusing out of the polymer matrix coated on the surface of said substrate and capable of reacting with a metal ion to form an electrically conductive layer on the surface of said coating;

b) partially drying the coated substrate to a point where the coating cures, whereby the sulfur containing component may diffuse to the surface of the partially dried film and form a metal sulfide and/or polysulfide continuous network film on or within the surface of said partially dried coating;

c) contacting the partially dried coated substrate of step (b) with a solution containing a metal ion or combination of metal ions, said metal ion or combination of metal ions is capable of forming an electrically conductive layer on or within the surface of said coating by reaction with said sulfur containing component;

d) drying said contacted coated substrate from step (c); and

e) contacting said dried coated substrate of step (d) with an element or compound capable of reducing said metal sulfide and/or polysulfide film.

24. The method according to claim 23 wherein the reducing element or compound is selected from the group consisting of aluminum foil in aqueous sodium carbonate or sodium borohydride.

25. The method according to claim 23 wherein said metal ion is gold.

26. The coated substrate obtained by the method of claim 23 comprising an ultra thin metal film providing EMI/RFI shielding wherein said ultra thin metal film is on or within the surface of said coating and wherein said metal film is continuous across the surface of said coated substrate and has a thickness within the range of about 50 A to about 5,000 A.

27. The coated substrate according to claim 42 wherein said metal film is gold and wherein said thickness is within the range of about 50 A to about 200 A.

28. A substantially labile sulfur free electrostatic dissipation and/or antistatic coated substrate when said coated substrate is prepared by the process comprising:

a) applying a coating composition to said substrate, said coating composition comprising a polymer binder adherent to said substrate and an effective amount of a sulfur containing component capable of diffusing out of the polymer matrix coated on the surface of said substrate and capable of reacting with a metal ion or ions to form an electrically conductive layer on the surface of said coating;

b) partially drying the coated substrate to a point where the coating cures, whereby the sulfur containing component may diffuse to the surface of the partially dried film and form a metal sulfide and/or polysulfide continuous network film on or within the surface of said partially dried coating;

c) contacting the partially dried coated substrate of step (b) with a solution containing metal ion or combination of metal ions, said metal ion or combination of metal ions is capable of forming an electrically conductive layer on or within the surface of said coating by reaction with said sulfur containing component;

d) drying said contacted coated substrate from step (c); and

e) contacting said dried coated substrate of step (d) with a reagent reactive with labile sulfur to produce said substantially labile sulfur free film.

29. The coated substrate according to claim 28 wherein said reagent is selected from copper (I) chloride.

30. An electrically conductive film, capable of dissipating electrostatic charge comprising a network of two or more metal ions, a sulfide and/or polysulfide on or within the surface of a cured polymer wherein said film has a resistivity in the range of about $10^1$ to about $10^{14}$ ohms/sq. and wherein said film has a thickness within the range of about 50 A to about 5,000 A.

31. The film according to claim 30 wherein said combination of metal ions include copper ions in combination with a metal selected from the group consisting of indium, palladium, molybdenum, and vanadium.

32. The film according to claim 31 wherein said film is produced by the process comprising:

a) applying a coating composition to said substrate, said coating composition comprising a polymer binder adherent to said substrate and an effective amount of a sulfur containing component capable of diffusing out of the polymer matrix coated on the surface of said substrate and capable of reacting with a metal ion to form an electrically conductive layer on the surface of said coating;

b) partially drying the coated substrate to a point where the coating cures, whereby the sulfur containing component may diffuse to the surface of the partially dried film and form a metal sulfide and/or polysulfide continuous network film on or within the surface of said partially dried coating;

c) contacting the partially dried coated substrate of step (b) with a solution containing a metal ion or combination of metal ions, said metal ions or combination of metal ions is capable of forming an electrically conductive layer on or within the surface of said coating by reaction with said sulfur containing component;

d) drying said contacted coated substrate from step (c); and

e) contacting said dried coated substrate of step (d) with a second metal ion solution wherein said metal ion will react at the surface of said coating on said substrate in order to produce at least a two metal sulfide and/or polysulfide network layer on or within the surface of the said coating.

33. A method for depositing an electrically conductive coating on a substrate comprising:

a) applying a coating composition to said substrate, said coating composition comprising a polymer binder adherent to said substrate and an effective amount of a sulfur containing component capable of diffusing out of the polymer matrix coated on the surface of said substrate and cpable of reacting with a metal ion to form an electrically conductive layer on the surface of said coating;

b) partially drying the coated substrate to a point where the coating cures, whereby the sulfur containing component may diffuse to the surface of the partially dired coating and form a metal sulfide and/or polysulfide continuous network film on or within the surface of said partially dried coating;

c) contacting the partially dried coated substrate of step (b) with a solution containing a copper ion said copper ion is capable of forming an electrically conductive layer on or within the surface of said coating by reaction with said sulfur containing component;

d) drying said contacted coated substrate from step (c); and

e) contacting said dried coated substrate from step (d) with a second metal ion solution wherein said second metal ion will react at or near the surface of said coating and substantially replace said copper ion, producing a final metal ion sulfide and/or polysulfide network layer containing said second metal ion on or within the surface of said coating.

34. The coated substrate produced by the method of claim 33 wherein said final coating comprises a network of a metal ion selected from the group comprising Ag and Au, and a sulfide and/or polysulfide on or within the surface of said coating.

FIG. 1

EFFECT OF DRYING TIME ON RESISTIVITY

FIG. 2

EFFECT OF DEVELOPMENT TIME ON RESISTIVITY
(16 HOUR FILM DRY TIME)

LEGEND

BLOCK DIAGRAM OF THE COATING PROCESS

```
┌─────────────────────────────────┐
│ COATING OF SUBSTRATE WITH       │
│ POLYMER INCORPORATED SULFUR     │
│ CONTAINING COMPOUND             │
└─────────────────────────────────┘
                 │
                 ▼
┌─────────────────────────────────┐
│ DRYING OF COATED SUBSTRATE TO   │
│ DESIRED CURE POINT              │
└─────────────────────────────────┘
                 │
                 ▼
┌─────────────────────────────────┐
│ DEVELOPMENT OF COATING IN A     │
│ METAL SALT BATH GIVING A        │
│ METAL SULFIDE CONDUCTIVE        │
│ COATING                         │
└─────────────────────────────────┘
                 │
                 ▼
┌─────────────────────────────────┐
│           WASHING               │
└─────────────────────────────────┘
                 │
                 ▼
┌─────────────────────────────────┐
│ DRYING AT AMBIENT ROOM          │
│ TEMPERATURE OR ELEVATED         │
│ TEMPERATURE                     │
└─────────────────────────────────┘
```

FIG. 3

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X,P | EP-A-0 308 234 (COURTAULDS PLC) * Whole document * | 1-9,11-16,18,19,21 | H 01 B 1/20 H 01 B 1/12 H 01 B 1/22 C 09 D 5/24 B 05 D 5/12 |
| X | EP-A-0 086 072 (NIHON SANMO DYEING CO. LTD) * Whole document * | 1-9,11-16,18,19,21,23,25,28-32 | |
| X | US-A-4 556 507 (S. TOMIBE et al.) * Whole document * | 1-9,11-16,18,19,21,23,25,28-32 | |
| X | US-A-4 681 820 (S. TOMIBE et al.) * Whole document * | 1-9,11-16,18,19,21,23,25,28-32 | TECHNICAL FIELDS SEARCHED (Int. Cl.4) |
| A | US-A-4 661 376 (P.M. LIANG) * Whole document * | 1,2 | H 01 B 1 C 09 D 5 |

The present search report has been drawn up for all claims

| Place of search | Date of completion of the search | Examiner |
|---|---|---|
| THE HAGUE | 03-07-1989 | DROUOT M.C. |

EPO FORM 1503 03.82 (P0401)